# EUROPÄISCHE PATENTSCHRIFT

(11) **EP 0 542 775 B1**
(45) Veröffentlichungstag und Bekanntmachung des Hinweises auf die Patenterteilung: **30.03.1994**
(21) Anmeldenummer: 91913377.7
(22) Anmeldetag: 24.07.1991
(51) Int. Cl.: F01N 3/28

(54) **MONOLITHISCHER METALLISCHER WABENKÖRPER MIT VARIIERENDER KANALZAHL**
MONOLITHIC METAL HONEYCOMB BODY WITH VARYING NUMBER OF CHANNELS
CORPS METALLIQUE MONOLITHIQUE EN NID D'ABEILLES A NOMBRE VARIABLE DE CANAUX

(30) Priorität: 06.08.1990 DE 4024942
(43) Veröffentlichungstag der Anmeldung: 26.05.1993
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE)
(74) Vertreter: Kahlhöfer, Hermann, Dipl.-Phys.
(86) Internationale Anmeldenummer: EP9101389
(87) Internationale Veröffentlichungsnummer: WO9202716

(56) Entgegenhaltungen:
- EP-A- 0 245 737
- DE-U- 8 908 738
- US-A- 3 785 781
- PATENT ABSTRACTS OF JAPAN, vol. 12, no. 356 (M-745)(3203) 26. September 1988 & JP-A-63 113 112 (MAZDA) 18. Mai 1988
- PATENT ABSTRACTS OF JAPAN, vol. 12, no. 222 (M-712)(3069) 24. Juni 1988 & JP-A-63 018 123 (FUJI) 26. Januar 1988

## Beschreibung

Die vorliegende Erfindung betrifft einen monolithischen metallischen Wabenkörper, der insbesondere als Katalysator-Trägerkörper für die Reinigung von Abgasen bei Verbrennungsmaschinen eingesetzt wird.

Solche Wabenkörper sind in einer Vielzahl von Ausführungsformen bekannt, beispielsweise aus der EP-B1-0 245 737, der EP-B1-0 245 738 oder der W0-90/03220.

Es ist auch bekannt, daß es für eine möglichst effektive Abgasreinigung sinnvoll sein kann, mehrere Scheiben, gegebenenfalls auch unterschiedlicher Wabenstruktur oder Wabengröße in Strömungsrichtung hintereinander anzuordnen. Ein solcher Körper ist allerdings nicht mehr monolithisch, so daß ein höherer Aufwand bei der Fertigung, dem Einbinden in ein Mantelrohr und gegebenenfalls auch bei der Beschichtung erforderlich ist. Solche Körper aus mehreren Scheiben sind beispielsweise in der W0-90/04087 oder der EP-B1-0 121 175 beschrieben. Aus der US-PS 3,785,781 ist es auch bekannt, Solche Scheiben ohne Abstand hintereinander anzuordnen.

Zur Verbesserung der Effektivität und/oder der Strömungsverhältnisse in einem monolithischen Wabenkörper wurde auch bereits vorgeschlagen, in diesem durch verschiedene Strukturmaßnahmen die einzelnen Kanäle gegeneinander zu versetzen oder zu unterbrechen, so beispielsweise in der EP-A2-0 186 801, der EP-A1-0 152 560 oder der DE-A1-29 02 779, wodurch zusätzliche vom Abgas anströmbare Kanten entstehen, was für eine katalytische Umsetzung von Vorteil sein soll. Ein ähnlicher Effekt läßt sich auch durch Umstülpungen in einem Teil der Kanalwände erreichen, wie es beispielsweise in dem DE-U-89 09 128 (älteres Recht) beschrieben ist.

Den so gestalteten monolithischen Warenkörpern ist gemeinsam, daß sie in jedem Querschnittsbereich die gleiche Anzahl von Blechlagen verwenden, so daß die katalytisch aktive Fläche in jedem Querschnittsbereich gleich bleibt, auch wenn durch unterschiedliche Blechstrukturen in Bezug auf die Anströmkanten eine vergleichbare Wirkung erzielt wird wie bei einer Erhöhung der Kanalzahlen pro Flächeneinheit. Die katalytisch aktive Fläche pro Querschnittsbereich kann jedoch hierdurch nicht verändert werden.

Bei monolithischen Wabenkörpern, deren Anwendung wegen der einfachen Handhabbarkeit und Einbindung in ein Abgassystem bevorzugt wird, ist daher nach dem Stand der Technik die in einem ersten Querschnittsbereich vorhandene katalytisch aktive Fläche gleich der in jedem Querschnittsbereich in Strömungsrichtung folgenden. Dies erlaubt eine Optimierung der Verhältnisse in einem monolithischen Wabenkörper in Bezug auf das Anspringverhalten und die Beständigkeit gegen thermische Alterung nur in begrenztem Umfang. Wünscht man z. B., daß der Wabenkörper beim Kaltstart des Motors möglichst schnell eine zur katalytischen Umsetzung genügende Temperatur erreicht, so sollte er in seinem ersten Querschnittsbereich keine zu große Masse aufweisen, was jedoch bei Monolithen zwangsläufig zur Folge hat, daß sie die gleiche Masse auch in jedem nachfolgenden Querschnittsbereich beibehalten müssen, so daß der Körper für eine vollständige Umsetzung gegebenenfalls unerwünscht lang sein muß (geringe Anzahl an Kanälen, dafür große Länge der Kanäle).

Wird der Körper jedoch mit vielen Kanälen und einer kurzen Baulänge gestaltet, so hat er einerseits unter Umständen ein ungünstiges Kaltstartverhalten, setzt jedoch nach Erreichen der Betriebstemperatur in einem vorderen Querschnittsbereich schon den weitaus größten Teil der Schadstoffe im Abgas in exothermen Reaktionen um, so daß in diesem ersten Teilabschnitt ein Temperaturmaximum auftritt, welches zu einer vorzeitigen Alterung der katalytisch aktiven Beschichtung führt, wobei sich diese hohe Temperatur durch die Strömung auch den nachfolgenden Schichten mitteilt, so daß diese ebenfalls thermisch altern, obwohl sie nur geringe Beiträge zur katalytischen Umsetzung leisten.

Aufgabe der vorliegenden Erfindung ist es, einen Aufbau eines monolithischen Wabenkörpers anzugeben, welcher mit variierender Kanalzahl, d. h. auch mit in Strömungsrichtung unterschiedlichen Massen und unterschiedlich großen katalytisch aktiven Flächen an verschiedene Anwendungsbedingungen gut anpaßbar ist. Insbesondere sollen Anspringverhalten, thermische Alterung und Baulänge gleichzeitig günstig beeinflußbar sein.

Zur Lösung dieser Aufgabe dient ein von einem Fluid in einer Strömungsrichtung durchströmbarer Wabenkörper mit einer anströmseitigen Stirnseite und einer davon beabstandeten abströmseitigen Stirnseite, wobei der Wabenkörper aus lagenweise angeordneten, zumindest teilweise strukturierten Blechen besteht, welche etwa in Strömungsrichtung verlaufende Kanäle von durch die Strukturen der Bleche bestimmten Dimensionen bilden, wobei weiter die Zahl der Kanäle pro Querschnittsfläche und damit die Querschnittsfläche der einzelnen Kanäle in verschiedenen in Strömengsrichtung hintereinander liegenden Teilabschnitten variiert. Damit ein Wabenkörper als monolitischer Körper bezeichnet werden kann, muß er aus einem Block mit einem inneren Zusammenhalt bestehen. Ein solcher Zusammenhalt wird erfingungsgemäß bevorzugt durch glatte oder im Verhältnis zu den Dimensionen der Kanäle schwach strukturierte Blechlagen erzielt, indem ein Teil der Blechlagen in dem Wabenkörper sich durchgehend von der anströmseitigen zur abströmseitigen Stirnseite erstreckt. Durch diese Blechlagen erhält der Körper seine monolithische Struktur und äußere Gestalt.

Die Abstände zwischen diesen Blechlagen in verschiedenen Teilabschnitten sind durch unterschiedliche Anzahlen von Blechlagen ausgefüllt.

Wesentlicher Schritt dabei ist, daß der monolithische Wabenkörper aus Blechen unterschiedlicher Breite und mit unterschiedlich dimensionierten Strukturen aufgebaut wird, wodurch gerade die gewünschte Variation der Kanalzahlen und katalytisch aktiven Flächen erreichbar ist. Wie aus dem o. g. Stand der Technik zu ersehen ist, gibt es viele unterschiedliche Blechstrukturen und Anordnungsweisen von Blechlagen, mit denen Wabenkörper aufgebaut werden können. Die Erfindung ist im Prinzip auf alle diese Formen anwendbar, wenn auch mit unterschiedlichem Aufwand. Eine der häufigsten Strukturen ist die Verwendung von abwechselnden Lagen glatter und gewellter Bleche. Aus verschiedenen Gründen werden dieser Grundstruktur jedoch in manchen Anwendungsfällen noch schwache Strukturen überlagert, beispielsweise indem die glatten Bleche eine Mikrowellung mit kleiner Wellenlänge und kleiner Amplitude 5 erhalten, oder indem alle Bleche eine quer zur Strömungsrichtung verlaufende Mikrostruktur aufweisen. Im folgenden wird unter einer glatten Blechlage eine Blechlage verstanden, deren Struktur im Verhältnis zu den in dem Wabenkörper auftretenden Dimensionen der Kanäle klein ist, beispielsweise kleiner als 20 % der größten Dimension der Kanäle. Unter einer starken Struktur wird hingegen eine Struktur verstanden, welche in der Größenordnung der auftretenden Dimensionen der Kanäle liegt und gerade für die Bildung der Kanäle mit diesen Dimensionen verantwortlich ist.

Da nach den verschiedenen Bauformen ein Wabenkörper entweder aus einer Vielzahl einzelner Bleche aufgebaut sein kann, andererseits aber auch Bauformen bekannt sind, bei denen der ganze Wabenkörper nur aus einem oder zwei spiralig gewickelten oder mäanderförmig geschichteten Blechen besteht, wird im folgenden und in den Patentansprüchen teilweise die Bezeichnung "Blechlagen" als Oberbegriff benutzt, wobei es keine Rolle spielt, ob die einzelnen Blechlagen durch ein gewickeltes oder gefaltetes Blech oder durch getrennte Bleche gebildet werden.

Durch weitere glatte Blechlagen, die sich jeweils nur über einen Teil des Abstandes der Stirnseiten erstrecken, kann der Wabenkörper weiter unterteilt werden. Die zusätzlichen Blechlagen und die zwischen diesen anzuordnenden strukturierten Bleche erfüllen gerade die Anforderung, in bestimmten Teilabschnitten des Wabenkörpers mehr katalytisch aktive Fläche und eine größere Anzahl von Kanälen unterzubringen.

Wie anhand der Zeichnung näher erläutert wird, können unterschiedliche Kanalzahlen in unterschiedlichen Querschnittsbereichen durch die Verwendung von mindestens zwei Arten von unterschiedlichen, etwa parallel zur Strömungsrichtung stark strukturierten Blechen erzielt werden, die Abstände zwischen den einzelnen glatten Blechen werden durch stark strukturierte Bleche ausgefüllt, welche die Begrenzungen die Kanäle bilden.

Geeignet als stark strukturierte Bleche sind in üblichen Formen gewellte oder trapezförmig oder zick-zack-förmig gebogene Bleche mit unterschiedlicher Strukturhöhe.

Die durch den ganzen Körper hindurchgehenden glatten Bleche haben untereinander einen Lagenabstand, welcher die größte vorkommende Strukturhöhe der stark strukturierten Bleche bestimmt. Durch hinzukommende glatte Zwischenbleche wird diese Strukturhöhe unterteilt, im einfachsten Falle in zwei gleiche Abstände oder aber auch in drei oder vier. Dementsprechend müssen die Strukturhöhen von Blechen zur Ausfüllung dieser Abstände zur ersten Strukturhöhe ein Verhältnis von annähernd 1:2, 1:3 oder 1:4 haben. Bei dem genauen Verhältnis der Wellhöhen müßte noch die Dicke der glatten Zwischenlagen berücksichtigt werden, welche normalerweise fast vernachlässigbar klein ist, da sie im Bereich der elastischen Verformbarkeit der strukturierten Bleche liegt. Die angegebenen Zahlenverhältnisse müssen deshalb jedoch nur annähernd zutreffen.

Grundsätzlich lassen sich unterschiedliche Kanalzahlen auch durch unterschiedliche, stark strukturierte Bleche gleicher Strukturhöhe aber unterschiedlicher Strukturbreite verwirklichen. Allerdings werden dabei die Kanalformen stark verändert, was zu ungünstigen hydraulischen Querschnitten führen kann.

Es sei auch darauf hingewiesen, daß sich eine feinere Unterteilung zwischen durchgehenden glatten Blechlagen auch durch zwei oder mehrere entgegengesetzt schräg gewellte Blechlagen, welche ohne glatte Zwischenlage aufeinander liegen, erreichen läßt. Zwischen zwei glatten Blechlagen liegt dann im ersten Teilabschnitt des Wabenkörpers nur eine gewellte Blechlage mit großer Strukturhöhe, während in weiteren Teilabschnitten mehrere aufeinander geschichtete gegenläufig schräg gewellte Blechlagen angeordnet sein können.

In den Übergangsbereichen zwischen den einzelnen Teilabschnitten in einem Wabenkörper kann es aufgrund unregelmäßiger Überschneidungen der Kanalwände von großen und kleinen Kanälen zu ungünstigen Konstellationen kommen, welche insbesondere bei einer späteren Beschichtung mit katalytisch aktiver Masse zu Verstopfungen führen könnten. Aus diesem Grunde kann es sinnvoll sein, die stark strukturierten Bleche in mindestens einem Teilabschnitt des Wabenkörpers schmaler zu machen, als die Breite dieses Teilabschnittes, wodurch sich im Ubergangsbereich in Strömungsrichtung mehr oder weniger ausgedehnte Ausgleichsspalte zwischen den unterschiedlich strukturierten Blechlagen bilden, was sowohl für eine Beschichtung wie auch für die späteren Strömungsverhältnisse in dem Körper von Vorteil ist.

Für normale Anwendungsfälle hat sich eine Unterteilung des Wabenkörpers in zwei oder drei Teilabschnitte als günstig erwiesen. Dabei sollte ein erster Abschnitt etwa 50 bis 100 cpsi (das ist die übliche Angabe für die Anzahl der Kanäle pro Quadratinch) aufweisen und ein zweiter Abschnitt vorzugsweise 200 bis 500 cpsi. Falls erforderlich kann zwischen diesen beiden Abschnitten noch ein Abschnitt mit etwa 100 bis 200 cpsi liegen.

Für die meisten Anwendungsfälle wird es sinnvoll sein, den Wabenkörper so auszubilden, daß die Zahl der Blechlagen und der Kanäle pro Querschnittsfläche in Strömungsrichtung zunimmt. Dies führt zu einem günstigen Startverhalten und verringert gleichzeitig die Schädigungen durch thermische Alterung. In Verbindung mit weiteren, Schadstoffe senkenden Maßnahmen

oder Vorkatalysatoren kann aber auch eine umgekehrte Anordnung mit in Strömungsrichtung abnehmender Anzahl der Blechlagen sinnvoll sein.

Auch die Möglichkeit, die Zahl der Kanäle zunächst zunehmen und dann in Strömungsrichtung wieder abnehmen zu lassen, kann in Betracht gezogen werden. Auf diese Weise läßt sich beispielsweise ein Wabenkörper verwirklichen, der bezüglich seiner Einbaurichtung symmetrisch ist, so daß es nicht zu Einbaufehlern kommen kann. Auch können durch solche Anordnungen unter Umständen schalldämpfende Eigenschaften des Wabenkörpers besser ausgenutzt werden.

Fertigungstechnisch besonders günstig und für die Stabilität von Vorteil ist es, den Wabenkörper in an sich bekannter Art aus im Querschnitt etwa S-förmig verlaufenden Blechlagen aufzubauen. Ein solcher Wabenkörper ist durch gegensinniges Verschlingen der Enden eine Blechstapels herstellbar. Dabei ist es leicht möglich, den Stapel in unterschiedlichen Teilabschnitten aus einer unterschiedlichen Anzahl von Blechen zu schichten, um den gewünschten Aufbau zu erreichen. Im allgemeinen wird man dabei abwechselnd angeordnete glatte und gewellte Bleche verwenden, wobei die gewellten Bleche zwei oder mehr unterschiedliche Wellhöhen und/oder mittlere Wellbreiten aufweisen.

Grundsätzlich ist es bei einem solchen Stapel auch möglich, die Breite der nicht durch den ganzen Stapel durchgehenden glatten Bleche in jeder Zwischenlage einzeln frei zu wählen. Auf diese Weise entsteht ein Körper, bei dem die Begrenzung zwischen je zwei Teilabschnitten nicht in einer ebenen Fläche, sondern gekrümmt verläuft, so daß die einzelnen Kanäle in einem Teilbereich unterschiedlich lang sind. Auch eine solche Anordnung kann die schalldämpfenden Eigenschaften des Wabenkörpers günstig beeinflussen und außerdem einer ungleichmäßigen Strömungsverteilung über dem Querschnitt entgegenwirken helfen.

Weitere Einzelheiten und Ausführungsbeispiele der Erfindung werden anhand der Zeichnung näher erläutert. Es zeigen
Figur 1 eine schematisierte perspektivische Ansicht eines erfindungsgemäßen Wabenkörpers,
Figuren 2, 3 und 4 Teilansichten von Querschnitten durch Figur 1 entlang der Linien II - II, III - III und IV - IV,
Figur 5 einen schematisierten Längsschnitt durch Figur 1,
Figuren 6 und 7 noch weiter schematisierte Längsschnitte durch modifizierte Wabenkörper und
Figur 8 eine Veranschaulichung der verwendeten Maßangaben zu strukturierten Blechlagen.

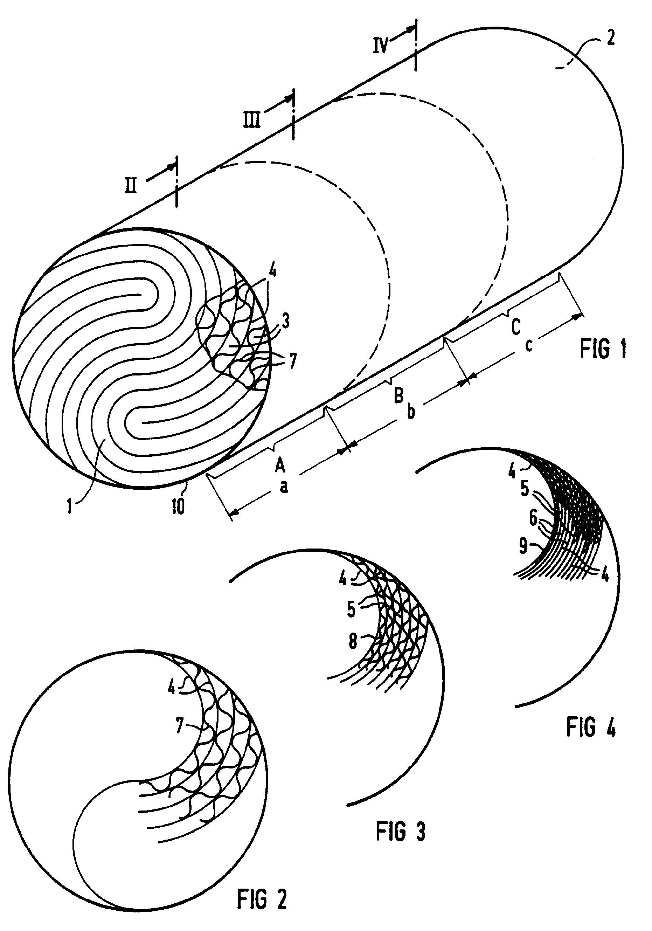

Figur 1 zeigt als spezielles Ausführungsbeispiel der Erfindung einen Wabenkörper mit einer anströmseitigen Stirnseite 1 und einer abströmseitigen Stirnseite 2 in perspektivischer Darstellung. Zur Erläuterung des Aufbaus dieses Körpers dienen auch die unterschiedlichen Querschnitte gemäß den Figuren 2, 3 und 4. Der Körper erhält seine monolithische äußere Gestalt zunächst durch glatte Bleche 4, welche durch den ganzen Körper und alle Querschnitte hindurch gehen. Diese Blechlagen 4 verlaufen jeweils in Querschnittsebene S-förmig. Zwischen den Blechlagen 4 sind in einem ersten Teilabschnitt gewellte Bleche 7 angeordnet, welche durch ihre Wellung die Größe von Kanälen 3 bestimmen. An den ersten Teilabschnitt A schließt sich in Strömungsrichtung ein zweiter Teilabschnitt B an, der sich vom Teilabschnitt A dadurch unterscheidet, daß zwischen den glatten Blechlagen 4 weitere zusätzliche glatte Blechlagen 5 vorhanden sind. Die Zwischenräume zwischen den glatten Blechlagen 4, 5 sind durch gewellte Bleche 8 unterteilt, wobei die gewellten Bleche 8 unter Vernachlässigung der Dicke der glatten Blechlagen etwa die halbe Wellhöhe der ersten gewellten Bleche 7 aufweisen. Im Teilabschnitt B weist der Wabenkörper etwa die doppelte Kanalzahl gegenüber dem Teilabschnitt A auf.

Im dritten Teilabschnitt C sind zusätzlich zu den auch dort verlaufenden glatten Blechlagen 4, 5 noch zusätzliche glatte Blechlagen 6 eingezogen und die verbleibenden Zwischenräume mit gewellten Blechlagen 9 unterteilt, welche wiederum eine entsprechend halbierte Wellhöhe gegenüber den gewellten Blechen 8 im Teilabschnitt B aufweisen. Ein solcher Wabenkörper kann daher beispielsweise im Teilabschnitt A eine Kanaldichte von 100 cpsi, im Teilabschnitt B 200 cpsi und im Teilabschnitt C 400 cpsi aufweisen und dennoch äußerlich eine rein monolithische Struktur haben.

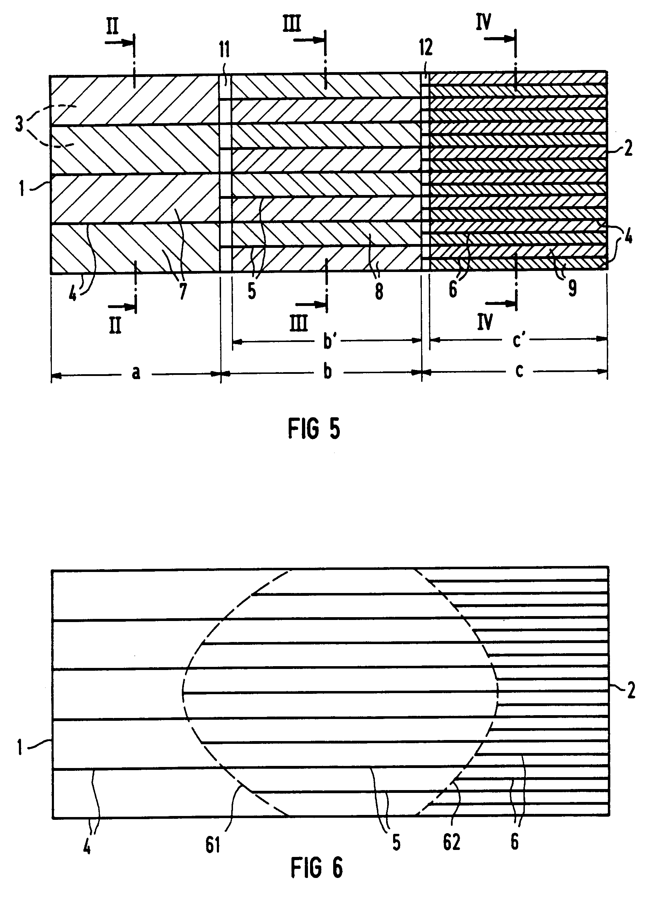

Figur 5 veranschaulicht die Verhältnisse in dem Wabenkörper nochmals in einem schematisierten Längsschnitt, wobei glatte Bleche als durchgezogene Linien und gewellte Bleche in schräger Schraffur dargestellt sind, obwohl bei dieser Darstellungsform nicht definiert ist, an welchen Stellen die gewellten Bleche gerade geschnitten werden. Die Schraffur soll dabei jedoch die jeweilige Wellhöhe der gewellten Bleche veranschaulichen. Die einzelnen Teile sind genau wie in Figur 1 bezeichnet, wobei nochmals veranschaulicht wird, daß der erste Teilabschnitt A die Länge a, der zweite Teilabschnitt B die Länge b und der dritte Teilabschnitt C die Länge c hat. Figur 5 zeigt jedoch in einer Hinsicht eine Besonderheit, nämlich dadurch, daß die gewellten Bleche 8 im Teilabschnitt B und die gewellten Bleche 9 im Teilabschnitt C nicht die ganze Breite diese Teilabschnitte ausfüllen. Die gewellten Bleche 8 haben nur eine Breite b' und die gewellten Bleche 9 haben nur eine Breite c', während die glatten Bleche 5 und 6 die volle Breite b bzw. c der Teilabschnitte B bzw. C ausfüllen. Die glatten Bleche dienen daher als Anschlag für die gewellten Bleche, so daß, wenn alle Bleche in dem Wabenkörper rechtsbündig geschichtet werden, Ausgleichsspalte 11, 12 entstehen, welche den Übergang von großen auf kleinere Kanäle jeweils begünstigen, und zwar sowohl im Hinblick auf eine Beschichtung mit katalytisch aktivem Material als auch im Hinblick auf die spätere Durchströmung des Wabenkörpers.

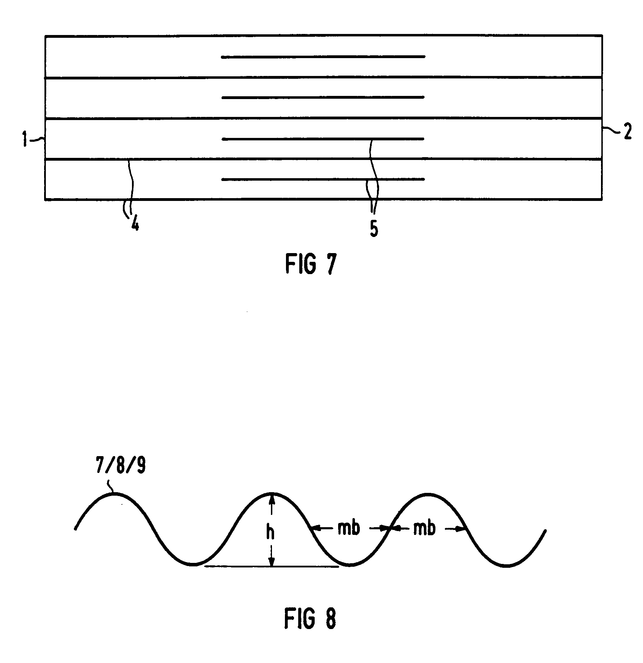

Die Figuren 6 und 7 veranschaulichen, daß es viele Varianten für die Anordnung unterschiedlich breiter glatter und gewellter Bleche in einem Wabenkörper gibt. In Figur 6 liegen die Begrenzungen 61, 62 zwischen je zwei Teilabschnitten in dem Wabenkörper nicht in einer ebenen Fläche, sondern verlaufen in dem dargestellten Längsschnitt beispielsweise parabelförmig, was bei Wabenkörpern mit S-förmigen Blechlagen zu einer insgesamt äußerst unregelmäßigen Grenzfläche zwischen den Teilabschnitten führt. Dies kann, wie oben erwähnt, Vorteile bezüglich der Schalldämpfung oder der Strömungsverteilung bewirken.

Der Vollständigkeit halber zeigt Figur 7 die Möglichkeit, die Zahl der Kanäle nur im mittleren Bereich eines Wabenkörpers zu erhöhen, in den stirnseitigen Bereichen jedoch klein zu halten.

Zur Erläuterung der Begriffe Strukturhöhe und mittlere Strukturbreite dient die Figur 8. Bei einer typischen Wellung, im vorliegenden Falle einer durch eine Evolventenverzahnung hergestellten Wellung, wie sie vorzugsweise für die Bleche 7, 8, 9 in den beschriebenen Ausführungsbeispielen Verwendung findet, ist die Strukturhöhe h der Abstand zwischen den Wellentälern und den Wellenbergen, während die mittlere Strukturbreite mb der mittlere Abstand der Wellenflanken hier z. B. bei halber Strukturhöhe h ist. Analog lassen sich für die unterschiedlichen bekannten Strukturen entsprechende Höhen und Breiten definieren, wobei letztendlich die Querschnittsfläche eine Wabenkörpers dividiert durch die in diesem Querschnittsbereich vorkommende mittlere Strukturhöhe und dividiert durch die dort vorherrschende mittlere Strukturbreite gerade die Anzahl der Kanäle in diesem Querschnittsbereich ergibt.

Die vorliegende Erfindung schafft die Basis zur Optimierung von Katalysatoren für Kfz-Abgassysteme bezüglich ihres Anspringverhaltens, ihrer thermischen Alterung und ihrer Baulänge. Sie bietet die Möglichkeit, auf unnötige Reservevolumina bei der Auslegung von Katalysatoren zu verzichten und damit Rohstoffe, insbesondere katalytisch aktive Edelmetalle zu sparen.

## Patentansprüche

1. Von einem Fluid in einer Strömungsrichtung durchströmbarer Wabenkörper mit einer anströmseitigen Stirnseite (1) und einer davon beabstandeten abströmseitigen Stirnseite (2), wobei der Wabenkörper aus lagenweise angeordneten, zumindest teilweise strukturierten Blechen (4, 5, 6, 7, 8, 9) besteht, welche etwa in Strömungsrichtung verlaufende Kanäle (3) von durch die Strukturen der Bleche (7, 8, 9) bestimmten Dimensionen bilden, wobei weiter die Zahl der Kanäle (3) pro Querschnittsfläche und damit die Querschnittsfläche der einzelnen Kanäle (3) in verschiedenen in Strömungsrichtung hintereinander liegenden Teilabschnitten (A, B, C) variiert, **dadurch gekennzeichnet,** daß ein Teil der Blechlagen (4) glatt oder im Verhältnis zu den Dimensionen der Kanäle (3) schwach strukturiert ist und sich von der anströmseitigen (1) zur abströmseitigen (2) Stirnseite erstreckt, wodurch der Körper eine monolitische Gestalt erhält, und daß die Abstände zwischen diesen Blechlagen (4) in verschiedenen Teilabschnitten (A,B,C) durch unter schiedliche Anzahlen von Blechlagen (4,5,6,7,8,9) ausgefüllt sind.

2. Wabenkörper nach Anspruch 1, **dadurch gekennzeichnet,** daß der Wabenkörper weitere glatte oder schwach strukturierte Blechlagen (5, 6) enthält, die sich jeweils nur über einen Teil (B, C) des Abstandes der Stirnseiten (1, 2) erstrecken.

3. Wabenkörper nach Anspruch 1 oder 2, **dadurch gekennzeichnet,** daß der Wabenkörper mindestens zwei Arten von unterschiedlichen, etwa parallel zur Strömungsrichtung stark strukturierten Blechen (7, 8, 9) mit Strukturhöhen (h) bzw. mittleren Strukturbreiten (mb) in den Größen der auftretenden Dimension der Kanäle (3) enthält, welche sich jeweils nur über einen Teilabschnitt (A, B, C) des Wabenkörpers erstrecken.

4. Wabenkörper nach Anspruch 3, **dadurch** **gekennzeichnet,** daß die unterschiedlichen, stark strukturierten Bleche (7, 8, 9) gewellte oder trapezförmig oder zick-zack-förmig gebogene Bleche mit unterschielicher Strukturhöhe (h) sind.

5. Wabenkörper nach Anspruch 4, **dadurch** **gekennzeichnet,** daß jeweils unterschiedliche, stark strukturierte Bleche (7, 8, 9) unterschiedliche Strukturhöhen (h) im jeweiligen Verhältnis von annähernd 1:2, 1:3 oder 1:4 haben.

6. Wabenkörper nach Anspruch 3, **dadurch gekennzeichnet,** daß die unterschiedlichen, stark strukturierten Bleche gleiche Strukturhöhe (h) aber unterschiedliche mittlere Strukturbreite (mb) aufweisen.

7. Wabenkörper nach Anspruch 5, **dadurch gekennzeichnet,** daß zwischen je zwei durchgehenden glatten oder schwach strukturierten Blechlagen (4) in unterschiedlichen Teilabschnitten (A, B, C) entweder eine stark strukturierte Blechlage (7) mit einer Strukturhöhe (h) entsprechend dem Abstand der durchgehenden Blechlagen (4) oder zwei, drei, vier oder mehr aufeinanderliegende, gegebenenfalls ihrerseits durch glatte oder schwach strukturierte Blechlagen (5, 6) getrennte, stark strukturierte Blechlagen (8, 9) entsprechend geringerer Strukturhöhe (h) angeordnet sind.

8. Wabenkörper nach Anspruch 3, **dadurch gekennzeichnet,** daß die stark strukturierten Bleche (8, 9) in zumindest einem Teilabschnitt (B, C) schmaler (b', c') sind als das durch die glatten oder schwach strukturierten Bleche (5, 6) gegebene Maß (b, c) des Teilabschnittes (B, C), so daß im Übergangsbereich zwischen Teilabschnitten (A, B, C) Ausgleichsspalte (11, 12) vorhanden sind.

9. Wabenkörper nach einem der vorhergehenden Ansprüche, **dadurch gekennzeichnet,** daß der Wabenkörper zwei oder drei in Strömungsrichtung hintereinander liegende Teilabschnitte (A, 8, C) unterschiedlicher Kanalzahl pro Flächeneinheit aufweist, vorzugsweise mit:
einem ersten Abschnitt (A) mit 50 - 100 Kanälen pro Quadratinch (cpsi),
gegebenenfalls einem zweiten Abschnitt (B) mit 100 - 200 cpsi und
einem weiteren Abschnitt (C) mit 200 - 500 cpsi.

10. Wabenkörper nach einem der vorhergehenden Ansprüche, **dadurch gekennzeichnet,** daß die Zahl der Blechlagen (4, 5, 6, 7, 8, 9) und der Kanäle (3) pro Querschnittsfläche in Strömungsrichtung zunimmt.

11. Wabenkörper nach einem der Ansprüche 1 bis 9, **dadurch gekennzeichnet,** daß die Zahl der Blechlagen (4, 5, 6, 7, 8, 9) und der Kanäle (3) pro Querschnittsfläche in Strömungsrichtung abnimmt.

12. Wabenkörper nach einem der Ansprüche 1 bis 9, **dadurch gekennzeichnet,** daß die Zahl der Blechlagen (4, 5) und der Kanäle (3) pro Querschnittsfläche in Strömungsrichtung erst zunimmt und dann wieder abnimmt.

13. Wabenkörper nach einem der vorhergehenden Ansprüche, **dadurch gekennzeichnet,** daß die Blechlagen (4, 5, 6, 7, 8, 9) etwa im Querschnitt S-förmig verlaufen.

14. Wabenkörper nach einem der vorhergehenden Ansprüche, **dadurch gekennzeichnet,** daß die Blechlagen aus abwechselnd angeordneten glatten (4, 5, 6) und gewellten (7, 8, 9) Blechen bestehen, wobei die gewellten Bleche (7, 8, 9) zwei oder mehr unterschiedliche Wellhöhen (h) und/oder mittlere Wellbreiten (b) aufweisen.

15. Wabenkörper nach einem der vorhergehenden Ansprüche, **dadurch gekennzeichnet,** daß die Begrenzung (61, 62) zwischen je zwei Teilabschnitten (A, B, C) nicht in einer ebenen Fläche, sondern gekrümmt verläuft, so daß die einzelnen Kanäle (3) in je einem Teilbereich (A, B, C) unterschiedlich lang sind.

## Claims

1. A honeycomb body through which a fluid can flow in one flow direction, having a flow-intake end (1) and a flow-discharge end (2) at a spacing therefrom, wherein the honeycomb body comprises at least partially structured sheets (4, 5, 6, 7, 8, 9) which are arranged in layer-wise manner and which form passages (3) extending approximately in the flow direction, of dimensions which are determined by the structures of the sheets (7, 8, 9), wherein moreover the number of passages (3) per cross-sectional area and thus the cross-sectional area of the individual passages (3) in various portions (A, B, C) which are disposed in succession in the flow direction varies, characterised in that a part of the sheet layers (4) is smooth or slightly structured in relation to the dimensions of the passages (3) and extends from the flow-intake end (1) to the flow-discharge end (2), whereby the body is of a monolithic form, and that the spacings between said sheet layers (4) in different portions (A, B, C) are filled by different numbers of sheet layers (4, 5, 6, 7, 8, 9).

2. A honeycomb body according to claim 1 characterised in that the honeycomb body contains further smooth or slightly structured sheet layers (5, 6) which each extend only over a part (B, C) of the spacing of the ends (1, 2).

3. A honeycomb body according to claim 1 or claim 2 characterised in that the honeycomb body includes at least two kinds of different sheets (7, 8, 9) which are heavily structured approximately parallel to the flow direction, with structure heights (h) or mean structure widths (mb) of the magnitudes of the dimension obtaining in respect of the passages (3) which each extend only over a portion (A, B, C) of the honeycomb body.

4. A honeycomb body according to claim 3 characterised in that the different, heavily structured sheets (7, 8, 9) are sheets which are corrugated or which are bent in a trapezium shape or in a zig-zag shape, with different structure heights (h).

5. A honeycomb body according to claim 4 characterised in that respectively different heavily structured sheets (7, 8, 9) have different structure heights (h) in the respective ratio of approximately 1:2, 1:3 or 1:4.

6. A honeycomb body according to claim 3 characterised in that the different, heavily structured sheets have the same structure height (h) but different mean structure widths (mb).

7. A honeycomb body according to claim 5 characterised in that arranged between each two continuous smooth or slightly structured sheet layers (4) in different portions (A, B, C) are either a heavily structured sheet layer (7) with a structure height (h) corresponding to the spacing of the continuous sheet layers (4) or two, three, four or more heavily structured sheet layers (8, 9) which lie one upon the other and which in turn are possibly separated by smooth or slightly structured sheet layers (5, 6), the heavily structured sheet layers (8, 9) being of correspondingly lower structure height (h).

8. A honeycomb body according to claim 3 characterised in that the heavily structured sheets (8, 9) are narrower (b', c') in at least one portion (B, C) than the dimension (b, c) of the portion (B, C) given by the smooth or slightly structured sheets (5, 6) so that there are compensating gaps (11, 12) in the transitional region between portions (A, B, C).

9. A honeycomb body according to one of the preceding claims characterised in that the honeycomb body has two or three portions (A, B, C) which are disposed in succession in the flow direction, with a different number of passages per unit of area, preferably with:
a first portion (A) with 50 - 100 passages per square inch (cpsi),
possibly a second portion (B) with 100 - 200 cpsi, and
a further portion (C) with 200 - 500 cpsi.

10. A honeycomb body according to one of the preceding claims characterised in that the number of sheet layers (4, 5, 6, 7, 8, 9) and passages (3) per cross-sectional area increases in the flow direction.

11. A honeycomb body according to one of claims 1 to 9 characterised in that the number of sheet layers (4, 5, 6, 7, 8, 9) and passages (3) per cross-sectional area decreases in the flow direction.

12. A honeycomb body according to one of claims 1 to 9 characterised in that the number of sheet layers (4, 5) and passages (3) per cross-sectional area first increases and then decreases again in the flow direction.

13. A honeycomb body according to one of the preceding claims characterised in that the sheet layers (4, 5, 6, 7, 8, 9) extend approximately in a S-shape in cross section.

14. A honeycomb body according to one of the preceding claims characterised in that the sheet layers consist of alternately arranged smooth sheets (4, 5, 6) and corrugated sheets (7, 8, 9), wherein the corrugated sheets (7, 8, 9) have two or more different corrugation heights (h) and/or mean corrugation widths (b).

15. A honeycomb body according to one of the preceding claims characterised in that the boundary (61, 62) between a respective pair of portions (A, B, C) extends not in a flat surface but curved so that the individual passages (3) in a respective portion (A, B, C) are of different lengths.

## Revendications

1. Corps en nid d'abeilles à travers lequel un fluide peut s'écouler dans une direction d'écoulement, avec un côté frontal amont (1) et, à distance, un côté frontal aval (2), le corps en nid d'abeilles étant constitué de tôles au moins pour partie structurées (4, 5, 6, 7, 8, 9), disposées en couches, qui forment des canaux (3) s'étendant approximativement dans la direction d'écoulement et dont les dimensions sont déterminées par les structurations des tôles (7, 8, 9), le nombre de canaux (3) par aire de section, et donc l'aire de section des canaux (3) individuels, variant dans différentes régions partielles (A, B, C) qui se succèdent dans la direction d'écoulement, **caractérisé** en ce qu'une partie des couches de tôles (4) est lisse ou faiblement structurée par rapport aux dimensions des canaux (3) et s'étend du côté frontal amont (1) jusqu'au côté frontal aval (2), de sorte que le corps reçoit une configuration monolithique, et en ce que les distances entre ces couches de tôles (4) sont remplies par des nombres différents de couches de tôles (5, 6, 7, 8, 9) dans les différentes régions partielles (A, B, C).

2. Corps en nid d'abeilles selon la revendication 1, **caractérisé** en ce que le corps en nid d'abeilles comporte d'autres tôles lisses ou faiblement structurées (5, 6), qui ne s'étendent respectivement que sur une partie (B, C) de la distance entre les deux côtés frontaux (1, 2).

3. Corps en nid d'abeilles selon la revendication 1 ou 2, **caractérisé** en ce que le corps en nid d'abeilles comprend au moins deux types de tôles différentes (7, 8, 9), fortement structurées approximativement parallèlement à la direction d'écoulement, avec des hauteurs de structuration (h) ou des largeurs moyennes de structuration (mb) de la taille des dimensions obtenues des canaux (3), qui ne s'étendent respectivement que sur une région partielle (A, B, C) du corps en nid d'abeilles.

4. Corps en nid d'abeilles selon la revendication 3, **caractérisé** en ce que les tôles différentes fortement structurées (7, 8, 9) sont des tôles ondulées ou recourbées en zigzag ou sous une forme trapézoïdale, avec des hauteurs de structuration (h) différentes.

5. Corps en nid d'abeilles selon la revendication 4, **caractérisé** en ce que les tôles différentes fortement structurées respectives (7, 8, 9) présentent des hauteurs de structuration différentes (h) dans un rapport respectif d'approximativement 1:2, 1:3 ou 1:4.

6. Corps en nid d'abeilles selon la revendication 3, **caractérisé** en ce que les tôles différentes fortement structurées présentent la même hauteur de structuration (h), mais des largeurs moyennes de structuration (mb) différentes.

7. Corps en nid d'abeilles selon la revendication 5, **caractérisé** en ce qu'entre deux couches de tôles lisses ou faiblement structurées (4) s'étendant de bout en bout, on a chaque fois disposé, dans les différentes régions partielles (A, B, C), soit une couche de tôle faiblement structurée (7) avec une hauteur de structuration (h) correspondant à la distance entre les couches de tôles (4) s'étendant de bout en bout, soit deux, trois, quatre ou plus de quatre couches de tôles fortement structurées (8, 9), de hauteur de structuration (h) réduite en conséquence, qui sont éventuellement elles-mêmes séparées par des couches de tôles lisses ou faiblement structurées (5, 6).

8. Corps en nid d'abeilles selon la revendication 3, **caractérisé** en ce que les-couches de tôles fortement structurées (8, 9) sont, dans au moins une région partielle (B, C), plus étroites (b', c') que la dimension (b, c) de la région partielle (B, C) qui est donnée par les tôles lisses ou faiblement structurées (5, 6), de sorte que des intervalles de compensation (11, 12) sont présents dans les zones de transition entre les régions partielles (A, B, C).

9. Corps en nid d'abeilles selon l'une quelconque des revendications précédentes, **caractérisé** en ce que le corps en nid d'abeilles présente deux ou trois régions partielles (A, B, C), se succédant dans la direction d'écoulement, avec des nombres différents de canaux par unité de surface, et ce, de préférence :
une première région (A) avec 50 à 100 canaux par pouce carré (cpsi),
éventuellement une deuxième région (B) avec 100 à 200 cpsi, et
une région supplémentaire (C) avec 200 à 500 cpsi.

10. Corps en nid d'abeilles selon l'une quelconque des revendications précédentes, **caractérisé** en ce que le nombre de couches de tôles (4, 5, 6, 7, 8, 9) et de canaux (3) par aire de section augmente dans la direction d'écoulement.

11. Corps en nid d'abeilles selon l'une quelconque des revendications 1 à 9, **caractérisé** en ce que le nombre de couches de tôles (4, 5, 6, 7, 8, 9) et de canaux (3) par aire de section diminue dans la direction d'écoulement.

12. Corps en nid d'abeilles selon l'une quelconque des revendications 1 à 9, **caractérisé** en ce que le nombre de couches de tôles (4, 5, 6, 7, 8, 9) et de canaux (3) par aire de section augmente puis diminue dans la direction d'écoulement.

13. Corps en nid d'abeilles selon l'une quelconque des revendications précédentes, **caractérisé** en ce que les couches de tôles (4, 5, 6, 7, 8, 9) s'étendent avec une section approximativement en S.

14. Corps en nid d'abeilles selon l'une quelconque des revendications précédentes, **caractérisé** en ce que les couches de tôles sont constituées d'une alternance de tôles lisses (4, 5, 6) et de tôles ondulées (7, 8, 9), les tôles ondulées (7, 8, 9 présentant deux ou plus de deux hauteurs d'ondulation (h) et/ou largeurs moyennes d'ondulation (mb) différentes.

15. Corps en nid d'abeilles selon l'une quelconque des revendications précédentes, **caractérisé** en ce que la délimitation (61, 62) entre deux régions partielles respectives (A, B, C) ne s'étend pas sur une surface plane, mais en courbe, de sorte que les différents canaux (3) sont de longueurs différentes dans chaque région partielle (A, B, C).
